# EUROPEAN PATENT SPECIFICATION

(11) **EP 1 313 639 B1**
(45) Date of publication and mention of the grant of the patent: **07.06.2006**
(21) Application number: 01953065.8
(22) Date of filing: 27.07.2001
(51) Int. Cl.: B62D 21/02, B62D 29/04, B62D 21/11

(54) **UNDERCARRIAGE FOR A VEHICLE**
FAHRZEUGUNTERBAU
TRAIN DE ROULEMENT POUR VEHICULE

(30) Priority: 24.08.2000 BE 200000532
(43) Date of publication of application: 28.05.2003
(73) Proprietor: Groep Stevens International, Naamloze Vennootschap, 9160 Lokeren (BE)
(72) Inventor: VERHAEGHE, Jan, B-9120 Beveren (BE)
(74) Representative: Luys, Marie-José A.H.
(86) International application number: PCT/BE2001/000123
(87) International publication number: WO 2002/016189

(56) References cited:
- WO-A-01/51338
- WO-A-97/48589
- DE-A- 19 716 847
- GB-A- 1 576 342
- US-A- 5 118 131

## Description

The invention relates to an undercarriage for a vehicle, which undercarriage comprises at least two longitudinal beams in the form of a tubular profile and at least one set of wheels, suspended, by the intermediary of suspensions, in a springy manner at two trestles which are connected to the two longitudinal beams, respectively, wherein each of the trestles comprises two parallel cheeks which connect with their upper portions at opposite sides against flat side walls of a tubular profile. Such an undercarriage is known for example from US5118131A.

By vehicle, hereby a drawn vehicle as well as an automotive vehicle is intended, with at least one axle at both extremities as well as with at least one axle at the rear extremity only. In particular, however, not exclusively, the invention relates to a semitrailer with one or more axles at its rear end.

A known undercarriage for a vehicle is described in the international patent application No. 97/48589 (publication number WO9748589A).

In WO9748589A, the longitudinal beams, and preferably also the transverse beams and the trestles with which possibly the wheel axles are connected to the longitudinal beams, are manufactured of a thermo-curable resin reinforced with glass fibers, carbon fibers, aramide fibers and the like.

These longitudinal beams comprise an I-section with a hollow core, and the trestles with which the longitudinal beams are resting on the wheel axles, have an upper side in the shape of a tubular profile consisting of composite material which protrudes into the core of a longitudinal beam and is glued to the interior side of two standing side walls of this core.

When inserting the glued-in tubular element between the possibly also glued-in side walls of the core, the major part of the glue is pushed away. There is hardly a control possible on the remaining layer of glue between the tubular element of a trestle and the side walls of a core, such that there is little control in respect to the quality of the glueing.

If, in this known undercarriage, the synthetic material of the composite material should be a thermoplastic synthetic material, whereby, thus, instead of glue connections, welding connections are possible, such welding connection is difficult to apply for connecting a trestler or axle connection to a longitudinal beam. Another known undercarriage is described in US5118131 A. This undercarriage is totally made of steel, which adds considerably to its weight, and uses a suspension system wherein the sole means of articulation of the suspension to the chassis is through a pair of radius rods.

The invention aims at an undercarriage for a vehicle which avoids thesedisadvantages and whereby the connection of the trestles to the longitudinal beams is better and safer and whereby, when using thermoplastic synthetic material, this connection also may be a welding connection.

According to the invention, this aim is achieved in that the longitudinal beams and trestles consist of composite material, to wit synthetic material with reinforcement fibres, that the parallel cheeks are glued, or, when using thermoplastic synthetic material in the composite material, possibly welded to tubular profile, and that each longitudinal beam, at the location of atrestle, comprises at least two tubular profiles located one on top of the other and glued or welded to each other..

The cheeks may be fixed to the longitudinal beams from the exterior side, which allows a fixation which is easier to control and, therefore, allows a better fixation.

If further on, reference is made to welding, then this is only for the cases that the synthetic material of the composite material is thermoplastic. Such synthetic material can be glued as well as welded. Thermo-curable synthetic material can only be glued. In both cases, additionally or temporarily a mechanical fixation, for example, by means of bolts or rivets, can be applied.

The undercarriage may be a semitrailer and comprise a gooseneck, whereby the gooseneck is formed by at least one underlying tubular profile which is glued or welded below at least one upper tubular profile which extends over approximately the length of the undercarriage, whereby, at the location of a trestle, the longitudinal beam can be provided with more than one underlying tubular profile.

Each tubular profile is substantially rectangular, with two side walls and two connecting walls.

Thereby, at least one of the connecting walls, in its exterior side and in its longitudinal direction, can be provided with at least one groove and, apart therefrom, at least one corresponding rib, and preferably each connecting wall, in its exterior side and in its longitudinal direction, is provided with at least one groove and, apart therefrom, at least one corresponding rib, whereby the rib and the groove in the exterior side of one connecting wall are exchanged in respect to the rib and the groove in the other connecting wall.

With two tubular profiles placed one on top of the other, the rib of one penetrates into the groove of the other, whether the one tubular profile is placed onto the other heads-up or upside down.

This prevents the warping when the tubular elements are tensioned during the drying of the glue.

One of the side walls of the tubular profile may also be elongated with an edge protruding beyond a connecting wall, which edge is narrower than the side wall itself, whereas the other side wall, against the same connecting wall, is provided with a corresponding recess, such that the protruding edge of a similar tubular profile f.its into the recess, whereas then the protruding edge of the first-mentioned tubular profile fits into the recess of this last-mentioned tubular profile.

From two tubular profiles positioned one on top of the other, at opposite sides the protruding edge of the one profile fits into the recess of the other and can be glued into the recess.

This also prevents the warping when the glue dries, and moreover increases the surface for glueing. Moreover, when glueing together the tubular elements, also a vertical glueing surface is obtained.

With the intention of better showing the characteristics of the invention, hereafter, as an example without any limitative character, a preferred form of embodiment of an undercarriage and of a method for manufacturing a longitudinal beam therefor according to the invention is described, with reference to the accompanying drawings, wherein:
figure 1 represents a vehicle with an undercarriage according to the invention;
figure 2, at a larger scale, represents the part indicated by F2 in figure 1;
figure 3 represents a cross-section according to the line III-III in figure 1, drawn at a larger scale;
figure 4, at the same scale as figure 3, represents a cross-section according to line IV-IV in figure 1;
figure 5 represents a cross-section analogous to that of figure 4, however, relating to another form of embodiment of the invention;
figure 6 represents a cross-section according to the line VI-VI in figure 1;
figure 7 in perspective represents the cross-section according to line VII-VII in figure 2, however, exclusively of the elements consisting of composite material;
figure 8 represents a cross-section analogous to that of figure 4, however, relating to another form of embodiment of the invention;
figure 9 in perspective represents a cross-section analogous to that of figure 7, however, relating to still another form of embodiment of the invention.

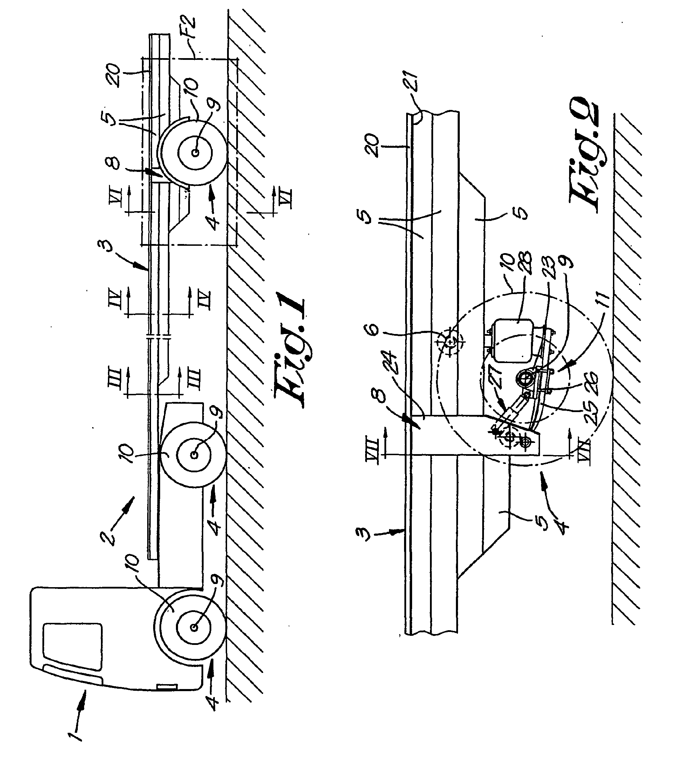

In figure 1, a combination of a tractor 1 and a semitrailer 2 is represented, forming a vehicle according to the invention.

In a conventional manner, the semitrailer 2 consists of a chassis 3 which, at the rear, is resting upon wheel sets 4, of which, for simplicity's sake, only one is represented in the figures, and upon which chassis a not-represented floor and/or body is provided.

The chassis 3 substantially is formed by two longitudinal beams 5 and transverse beams 6 mounted in between them.

The longitudinal beams 5 as well as the transverse beams 6 are manufactured of composite material which consists of synthetic material reinforced by fibers.

The synthetic material may be thermo-curable, for example, polyester, as well as thermoplastic, such as, amongst others, polypropylene and polyamid, whereas suitable reinforcement fibers, amongst others, are glass fibers, carbon fibers, kevlar fibers or aramide fibers.

Each of the longitudinal beams 5 has a height varying in longitudinal direction, as it consists, depending on the location in this direction, of one, two, three or even four tubular profiles 7 positioned one on top of the other.

The upper tubular profile, 7 extends over the entire length of the longitudinal beam 5, and in front, above the rear side of the tractor 1, the longitudinal beam 5 exclusively comprises this tubular profile 7. In front, at these upper tubular profiles 7 of the two longitudinal beams 5, a transverse plate, preferably made of the same composite material, is attached, which plate carries the king pin with which the semitrailer 2 is coupled to the tractor 1.

Behind the tractor 1 and up to the rear end of the semitrailer 2, the longitudinal beams 5 have a second tubular profile 7 underneath the aforementioned one.

At the location of the trestles 8 with which the wheel axle 9 of the wheel set 4 is suspended at the chassis 3, in the form of embodiment as represented in figures 1, 2 and 7, each longitudinal beam 5 further comprises two additional tubular profiles 7 and, therefore, four tubular profiles 7 on top of each other.

Two wheels 10 are attached in a fixed, turnable, respectively, manner at the wheel axle 9 which is turnable or fixed.

These tubular profiles 7 may be manufactured by means of techniques, such as "pultrusion" or "continuous compressing moulding". This last-mentioned technique consist in bringing the synthetic material and the reinforcement fibers or a mat consisting of pre-impregnated fibers into a heated mould and thereafter, by means of a high pressure of, for example, approximately 100 ton per m², pressing the mixture of polymer and reinforcement into the desired shape.

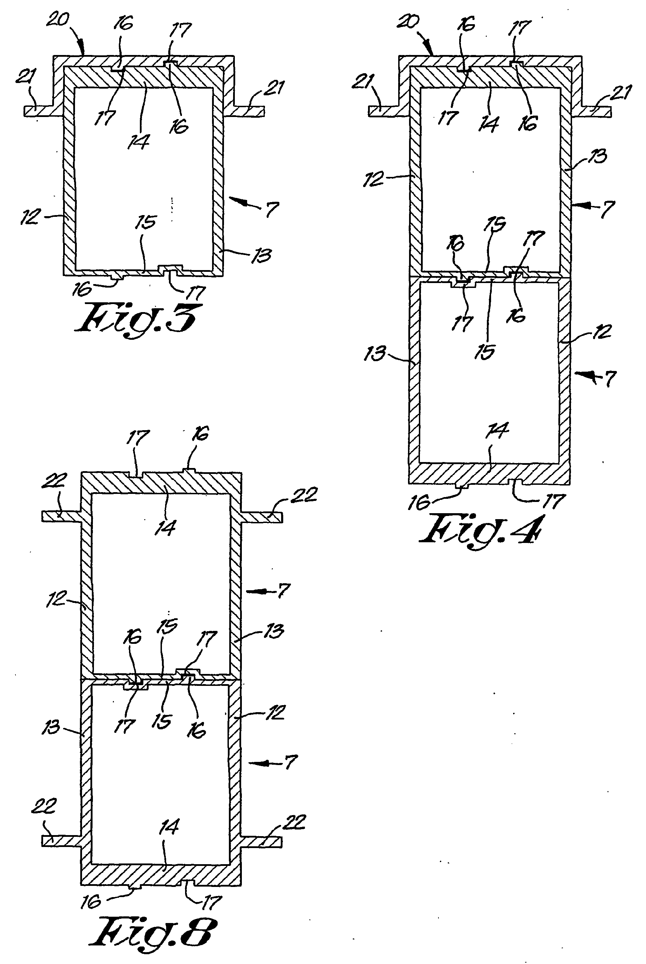

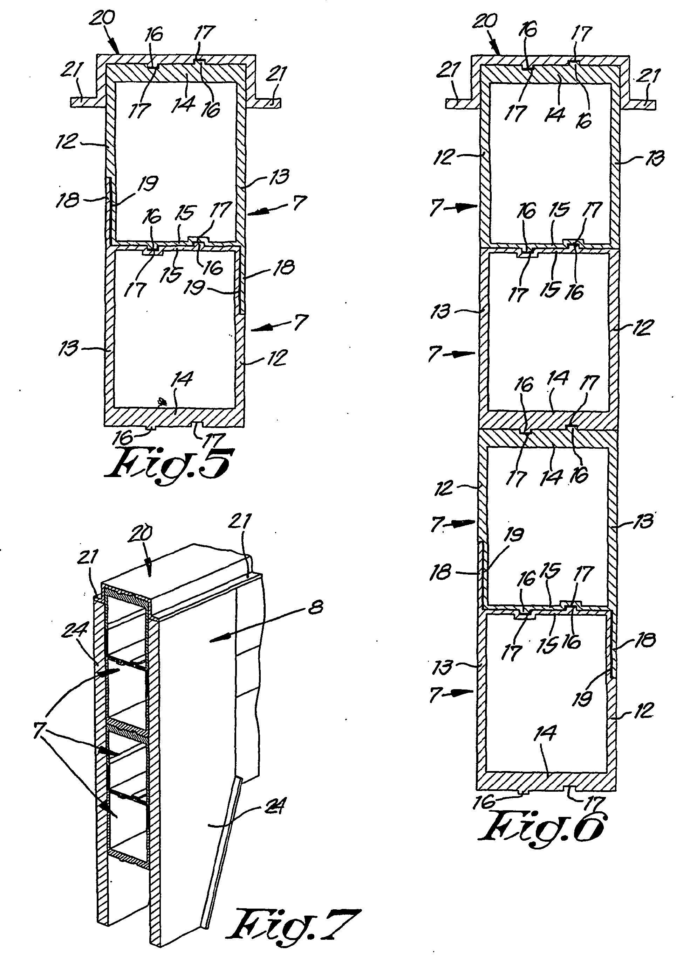

As represented in detail in figure 3, a tubular profile 7 has a substantially rectangular cross-section with two side walls 12 and 13, and two narrower connecting walls 14 and 15, of which one is thicker and the other is thinner than the side walls 12 and 13.

In the connecting wall 14 situated at the top in figure 3, the exterior side is provided with a rib 16 and a groove 17 extending in longitudinal direction.

The connecting wall 15, situated below in this figure, also is provided with a similar rib 16 and a groove 17 at its exterior side, whereby, however, the rib 16 and the groove 17 are exchanged, or, in other words, the groove 17 situated in the connecting wall 15 is positioned opposite to a rib 16 in the connecting wall 14.

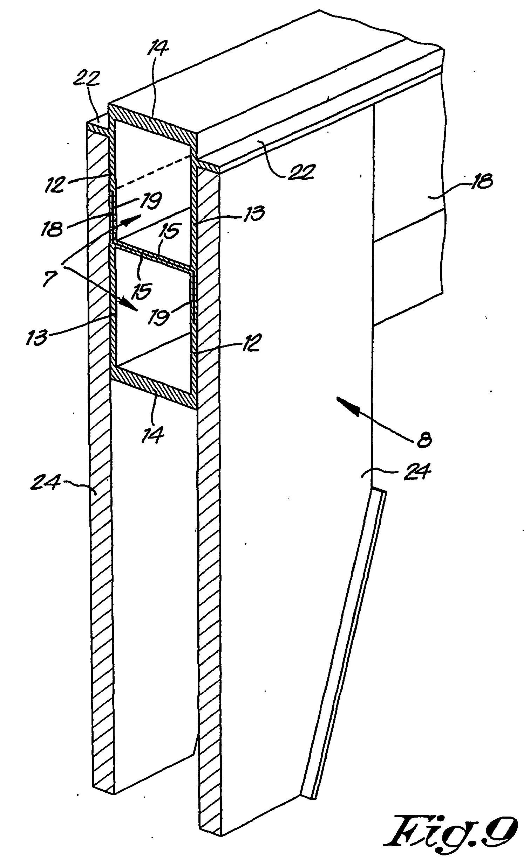

As represented in figure 4, two such tubular profiles 7 can be glued on top of each other, whereby the lower tubular profile 7 is reversed in respect to the upper and the rib 16 and the groove 17 of the connecting wall 15 of the upper tubular profile 7 fit into, over, respectively, the groove 17 and the rib 16 of the connecting wall 15 of the lower tubular profile 7.

Due to the ribs 16 and grooves 17 which fit into each other, a lateral shifting during glueing is avoided, and also a warping as a result of the shrinkage of the glue during the drying of this glue is avoided. During the drying of the glue, the two tubular profiles 7 can be clamped between two walls which, opposite to the connecting walls 15, press the side walls 13 towards each other.

In order to even more prevent the lateral shifting and to obtain an even stronger glue connection between two tubular profiles 7, in a form of embodiment, as represented in figure 5, the side wall 13 may be elongated beyond the connecting wall 15 by means of an edge 18, the thickness of which is approximately half of the thickness of the side wall 13, and the exterior side of which is situated in the plane of the exterior side of the side wall 13.

Towards the connecting wall 15, the thickness of the other side wall 12, over a height corresponding to the width of the edge 18, is halved, such that a recess 19 is formed at the exterior side, into which recess an edge 18 of another tubular profile 7 is fitting.

It is obvious that due to the edges 18 which are glued into recesses 19, also vertically-directed glue connections are obtained.

When two tubular profiles 7 are glued on top of each other, at one side the edge 18 of the upper tubular profile 7 is glued into a recess 19 of the lower tubular profile 7, whereas, at the other side, the edge 18 of the lower tubular profile is glued into the recess 19 of the upper tubular profile 7.

At the location where the longitudinal beam 5 comprises three tubular profiles 7 one on top of each other, the third tubular profile 7 is glued against the underside, this is the connecting wall 14, of the lower tubular profile 7 of the upper pair.

For the form of embodiment of the third tubular profile 7 with an edge 18, this edge 18 must be situated below and possibly may be removed. For the form of embodiment without an edge 18, the third tubular profile 7 may be glued head-side up or upside down.

At the location where a longitudinal beam 5 locally comprises four tubular profiles 7 situated one on top of the other, one pair of tubular profiles 7, as represented in figure 6 or in figure 7, is glued onto a pair of similar tubular profiles 7, as represented in figure 6, a pair of tubular profiles 7 similar to this, as represented in figure 4, is glued onto a pair of tubular profiles 7, similar to this, as represented in figure 5.

Onto the upper tubular profile 7, a covering profile 20 may be glued which, complementary to the rib 16 and the groove 17 in the upper side of this tubular profile 7, comprises a groove 17 and a rib 16.

At opposite sides and somewhat lower than its upper side, this covering profile 20 comprises a laterally protruding edge 21. Onto the edges 21 of the covering profiles 20 of the two longitudinal beams 5, for example, a floor can be laid or attached.

In a variant, each tubular profile 7, at opposite sides at its side walls 13, at a small distance to its connecting wall 14, may comprise an outward-directed edge 22, as represented in figure 8. A covering profile 20 then is redundant.

As represented in detail in figure 2, the extremities of the wheel axle 9 each rest in a cushion 23 which, by means of a suspension 11, is connected to a longitudinal beam 5 of the chassis 3, by the intermediary of a trestle 8.

This trestle 8 is also manufactured of composite material, for example, by the so-called "hand lay-up" method or by forming under heat and pressure, the so-called "compressing moulding" or further of pultruded plates.

This trestle 8 consists of two cheeks 24 which, in fact, are flat plates which are glued against the flat sides of the longitudinal beam 5, as represented in detail in figure 7.

Thus, the cheeks 24 connect with a large surface against the exterior sides of the side walls 12 or 13 of the four tubular profiles 7 and extend up to against an edge 21 or 22.

It is obvious that, if the tubular profiles 7 are of the type represented in figure 8, the edges 22 at the tubular profiles 7, with the exception of the upper edge, have to be removed at the location of the cheeks 24.

At the bottom, the cheeks 24 of the trestle 8 protrude from under the longitudinal beam 5, and under these longitudinal beams, between the cheeks 24, the leaf spring 25 of the suspension 11 is fixed in a hingeable manner. At a distance from the trestle 8, the wheel axle 9 is attached on the leaf spring 25, by the intermediary of the cushion 23, by means of attachment means 26.

The suspension 11 further comprises a shock absorber 27 between the cushion 23 and the trestle 8, and an air bellows 28 connected to a not-represented compressed-air source, between the free extremity of the leaf spring 28 and the underside of the longitudinal beam 5.

The transverse beams 6 are also manufactured of said composite material and may be tubular, with flanges at their extremities, which flanges are glued to the longitudinal beams 5. As represented in figure 2, one thereof can be glued to the innermost cheeks 24 of two trestles 8.

The obtained tubular-profile construction of the longitudinal beams 5 provides for light-weight beams with a particular torsion resistance. The transverse beams 6 do not only keep the two longitudinal beams 5 at their location, but also take up the torsion forces of the chassis 3 in longitudinal direction.

When the tubular profiles 7 and the transverse beams 6 are made of a composite material with a thermoplastic synthetic material, then glueing can be replaced by welding, such that particular forms of embodiment of the invention correspond to forms of embodiment described in the aforegoing, but whereby "glued" was replaced by "welded".

The maximum number of tubular profiles 7 must not necessarily be four. In some cases, three or even two already may be sufficient. It is important that the gooseneck is formed by a number of tubular profiles 7 increasing towards the rear.

The tubular profiles 7 must not necessarily comprise exactly one rib 16 and one groove 17 in their connecting walls 14 and 15. They may also comprise, for example, two ribs and two grooves, however, the number of grooves 17 and ribs 16 must be the same in order to be able to glue a tubular profile 7 with, at choice, the connecting wall 14 or the connecting wall 15 against the connecting wall 15 of the other tubular profile 7.

Possibly, the tubular profiles 7 also may comprise no ribs 16 and grooves 17, and in figure 9, actually a form of embodiment is represented which substantially differs from the forms of embodiment described in the aforegoing that, on one hand, the tubular profiles 7 do not have any ribs 16 and grooves 17 in their connecting walls 14 and 15, but nevertheless are provided with an edge 18 in the prolongation of the side wall 13 and a recess 19 in the side wall 12 and, on the other hand, also only two such tubular profiles 7 are present at the location of a trestle 8.

These tubular profiles 7 are glued to each other with their connecting walls 15, whereas the edge 18 of each of the tubular profiles 7 is glued into a recess 19 of the other tubular profile.

Moreover, no covering profile 20 is present, but edges 22 are present, such as in the form of embodiment of figure 8, however, exclusively at the upper tubular profile 7.

The two cheeks 24 of the trestle 8 are glued, up to these edges 22, against the side walls 12 and 13 of the pair of tubular profiles 7.

The invention is in no way limited to the form of embodiment described in the aforegoing and represented in the figures, however, such undercarriage can be realized in different variants, without leaving the scope of the invention.

## Claims

1. Undercarriage for a vehicle, which undercarriage (2) comprises at least two longitudinal beams (5) in the form of a tubular profile (7) and at least one set of wheels (4), suspended, by the intermediary of suspensions (11), in a springy manner at two trestles (8) which are connected to the two longitudinal beams (5), respectively, wherein each of the trestles (8) comprises two parallel cheeks (24) which connect with their upper portions at opposite sides against flat side walls of a tubular profile (7), **characterized in that** the longitudinal beams (5) and trestles (8) consist of composite material, to wit synthetic material with reinforcement fibres, that the parallel cheeks (24) are glued, or, when using thermoplastic synthetic material in the composite material, possibly welded to tubular profile (7), and that each longitudinal beam (5), at the location of a trestle (8), comprises at least two tubular profiles (7) located one on top of the other and glued or welded to each other.

2. Undercarriage according to claim 1, **characterized in that** it is a semitrailer and comprises a gooseneck, whereby the gooseneck is formed by at least one underlying tubular profile (7) which is glued or welded underneath at least one upper tubular profile (7) which extends over approximately the length of the undercarriage (2).

3. Undercarriage according to claim 2, **characterized in that** a longitudinal beam (5) comprises one upper tubular profile (7) which extends over the length of the longitudinal beam (5), and, at a distance from the front side, a second tubular profile (7), which is situated there below, for forming the gooseneck.

4. Undercarriage according to claims 1 and 3, **characterized in that** a longitudinal beam (5), at the location of a trestle (8), comprises one or more additional tubular profiles (7).

5. Undercarriage according to any of the preceding claims, **characterized in that** each tubular profile (7) substantially is rectangular, with two side walls (12,13) and two connecting walls (14, 15).

6. Undercarriage according to claim 5, **characterized in that** at least one connecting wall (14, 15) of the tubular profile comprises at least one groove (17) and adjacent thereto at least one corresponding rib (i6) in its exterior side and in its longitudinal direction.

7. Undercarriage according to claim 5, **characterized in that** each connecting wall (14,15) comprises at least one groove (i7) and adjacent thereto at least one corresponding rib (16), whereby the rib (16) and the groove (I i) in the exterior side of the one connecting wall (14) are exchanged in respect to the rib (16) and the groove (17) in the other connecting wall (15).

8. Undercarriage according to any of the claims 5 to 7, **characterized in that** one of the side walls (13) of the tubular profile (7) is elongated by an edge (18) extending beyond a connecting wall (15), which edge is narrower than the side wall (13) itself, whereas the other side wall (12), towards the same connecting wall (i5), is provided with a corresponding recess (19), such that the protruding edge (18) of a similar tubular profile (7) fits into the recess (19), whereas then the protruding edge (18) of the first-mentioned tubular profile (7) fits into the recess (19) of this last mentioned tubular profile (7).

9. Undercarriage according to any of the preceding claims, **characterized in that** each longitudinal beam (5) comprises a covering profile (20) which is glued or welded onto the top side of the upper tubular profile (7) and which comprises, at opposite sides, an edge (21) protruding beyond the side walls (12,13) of the upper tubular profile (7).

10. Undercarriage according to any of the claims 1 to 8, **characterized in that** each tubular profile (7), at each of its side walls (12,13), comprises an outwardly protruding edge (22), whereby at the location of a trestle (8), these edges (22), with the exception of the upper, are removed in order to allow the adjoining of the cheeks (24) of the trestle (8) against the longitudinal beam (5).

## Patentansprüche

1. Unterbau für ein Fahrzeug, wobei der Unterbau (2) mindestens zwei Längsträger (5) in der Form eines Hohlprofils (7) und mindestens einen Satz Räder (4) umfasst, die mittels Aufhängungen (11) federnd an zwei Gestellen (8) aufgehängt sind, welche jeweils mit den zwei Längsträgern (5) verbunden sind, wobei jedes der Gestelle (8) zwei parallele Wangen (24) umfasst, die sich mit ihren oberen Abschnitten an gegenüberliegenden Seiten zu den flachen Seitenwänden eines Hohlprofils (7) hin verbinden, **dadurch gekennzeichnet, dass** die Längsträger (5) und die Gestelle (8) aus Verbundmaterial, das heißt Kunststoff mit Verstärkungsfasern, bestehen, dass die parallelen Wangen (24) an das Hohlprofil (7) angeklebt oder, wenn thermoplastischer synthetischer Werkstoff im Verbundmaterial verwendet wird, angeschweißt sind und dass jeder Längsträger (5) am Ort eines Gestells (8) mindestens zwei Hohlprofile (7) aufweist, die sich aufeinander befinden und miteinander durch Kleben oder Schweißen verbunden sind.

2. Unterbau nach Anspruch 1, **dadurch gekennzeichnet, dass** er ein Sattelauflieger ist und einen Schwanenhals aufweist, wobei der Schwanenhals von mindestens einem darunter liegenden Hohlprofil (7) gebildet ist, das unter mindestens ein oberes Hohlprofil (7) geklebt oder geschweißt ist, welches sich annähernd über die Länge des Unterbaus (2) erstreckt.

3. Unterbau nach Anspruch 2, **dadurch gekennzeichnet, dass** ein Längsträger (5) ein oberes Hohlprofil (7), das sich über die Länge des Längsträgers (5) erstreckt, und mit einem Abstand von der Vorderseite ein zweites Hohlprofil (7), das sich darunter befindet, zum Bilden eines Schwanenhalses aufweist.

4. Unterbau nach Anspruch 1 und 3, **dadurch gekennzeichnet, dass** ein Längsträger (5) am Ort eines Gestells (8) ein oder mehrere zusätzliche Hohlprofile (7) aufweist.

5. Unterbau nach einem der vorhergehenden Ansprüche, **dadurch gekennzeichnet, dass** jedes Hohlprofil (7) im Wesentlichen rechteckig ist, mit zwei Seitenwänden (12, 13) und zwei Verbindungswänden (14, 15).

6. Unterbau nach Anspruch 5, **dadurch gekennzeichnet, dass** mindestens eine Verbindungswand (14, 15) des Hohlprofils mindestens eine Nut (17) und daran angrenzend mindestens eine entsprechende Verstärkungsrippe (16) an ihrer Außenseite und in ihrer Längsrichtung aufweist.

7. Unterbau nach Anspruch 5, **dadurch gekennzeichnet, dass** jede Verbindungswand (14, 15) mindestens eine Nut (17) und daran angrenzend mindestens eine Verstärkungsrippe (16) aufweist, wobei die Verstärkungsrippe (16) und die Nut (17) an der Außenseite der einen Verbindungswand (14) in Bezug auf die Verstärkungsrippe (16) und die Nut (17) in der anderen Verbindungswand (15) vertauscht sind.

8. Unterbau nach einem der Ansprüche 5 bis 7, **dadurch gekennzeichnet, dass** eine der Seitenwände (13) des Hohlprofils (7) durch eine Kante (18) verlängert ist, welche sich über eine Verbindungswand (15) hinaus erstreckt, wobei diese Kante schmaler als die Seitenwand (13) selbst ist, während die andere Seitenwand (12) zur selben Verbindungswand (15) hin mit einer entsprechenden Vertiefung (19) derart versehen ist, dass die vorstehende Kante (18) des erstgenannten Hohlprofils (7) in die Vertiefung (19) des letztgenannten Hohlprofils (7) passt.

9. Unterbau nach einem der vorhergehenden Ansprüche, **dadurch gekennzeichnet, dass** jeder Längsträger (5) ein Abdeckprofil (20) aufweist, das an die Oberseite des oberen Hohlprofils (7) angeklebt oder angeschweißt ist und das an gegenüberliegenden Seiten eine Kante (21) aufweist, die über die Seitenwände (12, 13) des oberen Hohlprofils (7) hinausragt.

10. Unterbau nach einem der Ansprüche 1 bis 8, **dadurch gekennzeichnet, dass** jedes Hohlprofil (7) an jeder seiner Seitenwände (12, 13) eine nach außen vorstehende Kante (22) aufweist, wobei am Ort eines Gestells (8) diese Kanten (22), mit Ausnahme der oberen, entfernt sind, um das Angrenzen der Wangen (24) von Gestell (8) an den Längsträger (5) zu ermöglichen.

## Revendications

1. Train de roulement pour véhicule, lequel train de roulement (2) comprend au moins deux poutres longitudinales (5) sous la forme d'un profilé tubulaire (7) et au moins un jeu de roues (4) suspendues par l'intermédiaire de suspensions (11) de manière élastique à deux chevalets (8) qui sont connectés respectivement aux deux poutres longitudinales (5), dans lequel chacun des chevalets (8) comprend deux joues parallèles (24) qui se connectent avec leurs parties supérieures sur des côtés opposés contre des parois latérales plates d'un profilé tubulaire (7), **caractérisé en ce que** les poutres longitudinales (5) et les chevalets (8) consistent en matériau composite, à savoir un matériau synthétique avec des fibres de renforcement, **en ce que** les joues parallèles (24) sont collées ou, quand on utilise du matériau synthétique thermoplastique dans le matériau composite, éventuellement soudées au profilé tubulaire (7) et **en ce que** chaque poutre longitudinale (5), à l'endroit d'un chevalet (8), comprend au moins deux profilés tubulaires (7) situés l'un au-dessus de l'autre et collés ou soudés l'un à l'autre.

2. Train de roulement selon la revendication 1, **caractérisé en ce qu'**il s'agit d'une semi-remorque et comprend un col de cygne, le col de cygne étant formé par au moins un profilé tubulaire (7) sous-jacent qui est collé ou soudé en dessous d'au moins un profilé tubulaire (7) supérieur qui s'étend approximativement sur la longueur du train de roulement (2).

3. Train de roulement selon la revendication 2, **caractérisé en ce qu'**une poutre longitudinale (5) comprend un profilé tubulaire (7) supérieur qui s'étend sur la longueur de la poutre longitudinale (5) et, à une distance du côté avant, un deuxième profil tubulaire (7) qui est situé en dessous pour former le col de cygne.

4. Train de roulement selon les revendications 1 et 3, **caractérisé en ce qu'**une poutre longitudinale (5), à l'endroit d'un chevalet (8), comprend un ou plusieurs profilés tubulaires (7) additionnels.

5. Train de roulement selon une quelconque des revendications précédentes, **caractérisé en ce que** chaque profilé tubulaire (7) est sensiblement rectangulaire avec deux parois latérales (12, 13) et deux parois de connexion (14, 15).

6. Train de roulement selon la revendication 5, **caractérisé en ce qu'**au moins une paroi de connexion (14, 15) du profilé tubulaire comprend au moins une rainure (17) et adjacente à celle-ci au moins une nervure (16) correspondante dans son côté extérieur et dans le sens de sa longueur.

7. Train de roulement selon la revendication 5, **caractérisé en ce que** chaque paroi de connexion (14, 15) comprend au moins une rainure (17) et adjacente à celle-ci au moins une nervure (16) correspondante, la nervure (16) et la rainure (17) dans le côté extérieur d'une paroi de connexion (14) étant permutées par rapport à la nervure (16) et à la rainure (17) dans l'autre paroi de connexion (15).

8. Train de roulement selon une quelconque des revendications 5 à 7, **caractérisé en ce qu'**une des parois latérales (13) du profilé tubulaire (7) est prolongée par un bord (18) s'étendant au-delà d'une paroi de connexion (15), lequel bord est plus étroit que la paroi latérale (13) même, tandis que l'autre paroi latérale (12), en direction de la même paroi de connexion (15), est pourvue d'un évidement (19) correspondant afin que le bord (18) en saillie d'un profilé tubulaire (7) similaire s'insère dans l'évidement (19), tandis que le bord (18) en saillie du profilé tubulaire (7) mentionné en premier s'insère dans l'évidement (19) de ce profilé tubulaire (7) mentionné en dernier.

9. Train de roulement selon une quelconque des revendications précédentes, **caractérisé en ce que** chaque poutre longitudinale (5) comprend un profil couvrant (20) qui est collé ou soudé sur le côté supérieur du profilé tubulaire (7) supérieur et qui comprend, sur des côtés opposés, un bord (21) faisant saillie au-delà des parois latérales (12, 13) du profilé tubulaire (7) supérieur.

10. Train de roulement selon une quelconque des revendications 1 à 8, **caractérisé en ce** chaque profilé tubulaire (7) comprend, sur chacune de ses parois latérales (12, 13), un bord (22) faisant saillie vers l'extérieur, ces bords (22), à l'exception du bord supérieur, étant enlevés à l'endroit d'un chevalet (8) pour permettre l'application des joues (24) du chevalet (8) contre la poutre longitudinale (5).
